Europäisches Patentamt

(19) European Patent Office

Office européen des brevets

(11) Publication number: **0 253 751**
**A2**

(12) # EUROPEAN PATENT APPLICATION

(21) Application number: **87500033.3**

(51) Int. Cl.⁴: **G 06 F 15/44**

(22) Date of filing: **11.06.87**

(30) Priority: **13.06.86 ES 556010**

(43) Date of publication of application:
**20.01.88 Bulletin 88/03**

(84) Designated Contracting States:
**AT BE CH DE FR GB GR IT LI LU NL SE**

(71) Applicant: **CEDAR, S.A.**
**C. de les Escoles Pies, 19**
**E-08017 Barcelona (ES)**

(72) Inventor: **Yago Garcia, Fernando**
**C. Maria Barrientos, 23**
**E-08028 Barcelona (ES)**

(74) Representative: **Ponti Grau, Ignasi**
**Paseo de Gracia, 33**
**E-08007 Barcelona (ES)**

(54) **Graphics and sound generating electronic systems.**

(57) The invention embraces improvements applicable to the electronic systems for generating graphics and sounds, such as for video game apparatus, of the kind comprising a master microprocessor connected to a data support memory unit and to control means, at least one slave microprocessor managing the video information of image planes, and at least one slave microprocessor handling audio information.

In a first aspect of the invention, the video information management is performed by a plurality of microprocessors, everyone of each independently deals with a corresponding image plane, thus speeding up screen display changes.

Another feature of the invention contemplates the use of a read and write magnetic memory device for general information, such as a floppy disk unit, combined with read and write solid state memories of the system and control means of the master microprocessor for placing informations of the magnetic memory in the solid state memory to be acceded by the screen and sound managing microprocessors.

FIG. 1

EP 0 253 751 A2

## Description

## GRAPHICS AND SOUND GENERATING ELECTRONIC SYSTEMS

The present invention relates to improvements applicable to the known systems for generating graphics and sounds.

## BACKGROUND OF THE INVENTION

Electronic systems for generating graphics and sounds are known, which comprise a plurality of interconnected microprocessors. In these known systems, one of the microprocessors plays the role of central or master microprocessor as regards the remainder ones, at least one of these remainder microprocessors handling the video information of an image plane, while at least another microprocessor handles the audio information, the master microprocessor being connected to a memory unit for data supporting and to control means.

The above systems usually show certain restrictions, such as the use of PROM or EPROM read only memories, which limit in some respects the sets of informations to be stored and the feasibility of easily changing from one set or mode of informations to another, and the use of a single microprocessor for dealing with the several image planes, which implies a loss in speed because the microprocessor must be free from previous tasks to initiate managing and displaying the next image plane.

## DESCRIPTION OF THE INVENTION

The present invention succeeds in solving the above drawbacks, as well as contributing some other improvements in the electronic systems of this kind.

Accordingly, a primary object of the present invention is to provide a new electronic system for generating graphics and sounds of the kind above referred to, in which the memory set includes read and write memory devices and associated microprocessors which allow to change easily the main sets of informations to be used by the system main microprocessors.

A further object of the invention is to provide a graphics and sound generating electronic system including a new audio network greatly enhancing the sound capabilities of the system as regards the variety of sounds to be created.

The improvements in electronic systems for generating graphics and sound which make the subject of the invention are featured by the fact that they comprise a plurality of microprocessors, each of these latter independently dealing with a single image plane, while the data supporting memory unit is a magnetic memory unit and adapted for reading and writing.

Preferably, the magnetic memory unit is a flexible disc of the "floppy disk" type.

The use of a magnetic support memory provides a great flexibility to the system.

The electronic system of the invention comprises as well as image control circuit including an independent microprocessor, a video unit and a random access dynamic memory unit connected to the microprocessor, and an information transfer unit for transferring information from the microprocessor to the video unit, the said image control circuit dealing with a plurality of preselected dimension image planes.

Another outstanding feature of the electronic system according to the invention resides on the fact that the control means comprise an independent, one pixel at a time scroll system in two directions and with no limit for each of the said image planes, and an independent lighting control, device.

Finally, the audio unit essentially comprises a fixed frequency generator, a plurality of programmable frequency generators, a sound synthesizer, a mixer and at least a power amplifier, wherein the amplitude and the amplitude enveloping line, the frequency and the frequency enveloping line of the generators are programmable, and wherein the synthesizer working frequency is also variable.

## BRIEF DESCRIPTION OF THE DRAWINGS

For a better understanding of the above exposition, the enclosed drawings show a preferred practical embodiment of the invention only by way of a non restrictive example. In the said drawings:

Figure 1 is a block diagram of the electronic system for generating graphics and sound which makes the subject of the invention;

Figure 2 is a block diagram corresponding to a MASTER board;

Figure 3 is a block diagram corresponding to a SPRITES board;

Figure 4 is a block diagram corresponding to a PLANE board; and

figure 5 is a block diagram correponding to an AUDIO board.

## DESCRIPTION OF A PREFERRED EMBODIMENT

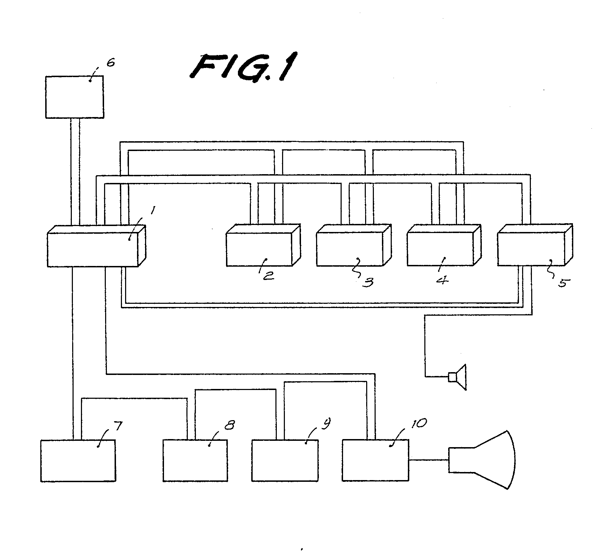

According to the preferred embodiment of the invention as shown in Figure 1, the electronic system according to the invention comprises five electronic boards: a MASTER board 1; a SPRITES board 2, two PLANE boards 3 and 4, and an AUDIO board 5.

The system consists of a multimicroprocessor architecture with five eight bit, type Z-80 microprocessors (one for a respective one of the above boards), a 60 Kbyte dynamic RAM memory for each microprocessor, and a fast transfer system for transferring information between the memories (DMA).

The MASTER board microprocessor does perform as an intelligent control for the remainder of the microprocessors and develops management of the floppy disc 6 and the outer inputs, these latter consisting of a 5, 8, 12 and 15 Volt feeder source 7, toggles and push-buttons 8, coin totalizers 9 and a monitor 10.

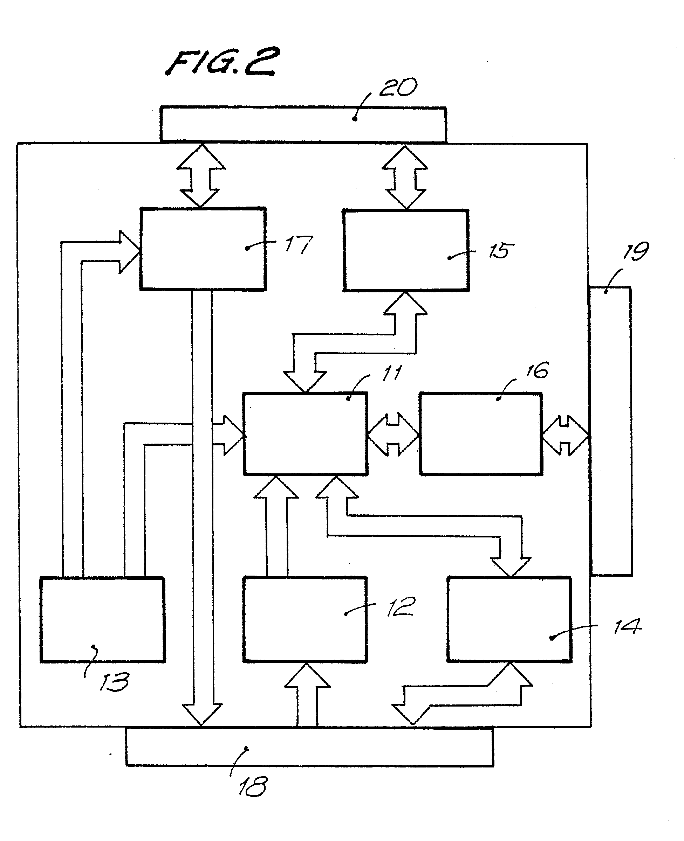

As can be seen in Figure 2, the MASTER board comprises a microprocessor 11, a RESET section 12, a CLOCK section 13, an INPUT/OUTPUT section 14, a DMA section 15, a DISK section 16 and a VIDEO CONTROL section 17.

The MASTER board has an outer connection 18, a disc-drive connection unit 19 and an inter-board connection 20.

The microprocessor section 11 comprises a central processing unit, a random access dynamic memory, memory access and control circuits, memory refreshing circuits and in/out control circuits.

The RESET section 12 comprises a circuit for the initial connection of the non-volatile memory and the initialize signal generator (RESET).

The CLOCK section 13 comprises frequency generator circuits for the video and microprocessor sections.

The INPUT/OUTPUT section 14 comprises the connection with the TV monitor 10 (Fig. 1), the toggles and push-buttons 8 (Fig. 1) and a general character magnification.

The DMA section 15 comprises circuits managing access to the memory of the other microprocessors.

The DISK section 16 comprises a disk-drive controller, and out- and input circuits.

The VIDEO-CONTROL section 17 comprise column counter, row counters and control signal generators.

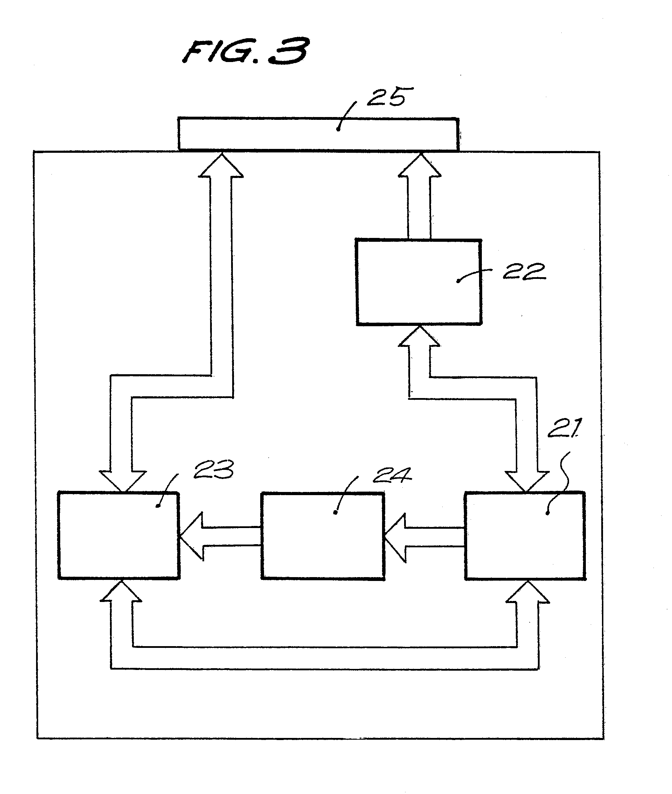

As can be seen in Figure 3, the SPRITES board 2 comprises a MICROPROCESSOR section 21, a DMA section 22, a VIDEO section 23 and a DMA-VIDEO section 24.

The SPRITES board has an inter-board connection 25.

The MICROPROCESSOR section 21 is analogous to the microprocessor section of the MASTER board.

The DMA section 22 comprises control signal access circuits, address access circuits and a data access circuit.

The VIDEO section 23 comprises a plurality of random access dynamic memory circuits, memory control circuits, memory refreshing circuits, address access circuits, a data access circuit, video information output circuits, a control signal generator, row counters, column counters, screen inverters, color amplifiers, lighting amplifiers, a priority generator, and display programming circuits.

The DMA-VIDEO section comprises control signal generating circuits, microprocessor memory address counters, video memory address counters, and an initial column programming circuit.

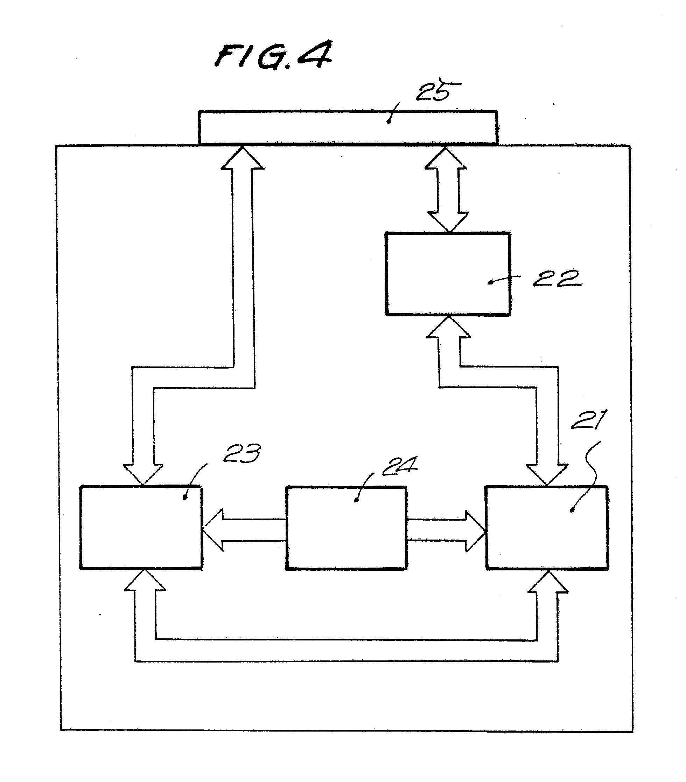

As can be seen in Figure 4, the PLANE board 3 and 4 comprises the same sections as the SPRITES board shown in Figure 3, and the same reference characters are thus used therein.

The MICROPROCESSOR section 21 is analogous to the microprocessor section of t he MASTER board 1, and sections DMA 22 and VIDEO 23 are analogous to the respective sections of the SPRITES board 2.

The DMA-VIDEO section 24 comprises automatic column and row counters with the purpose of allowing the transfer of a whole microprocessor memory row or column to the video memory and vice versa.

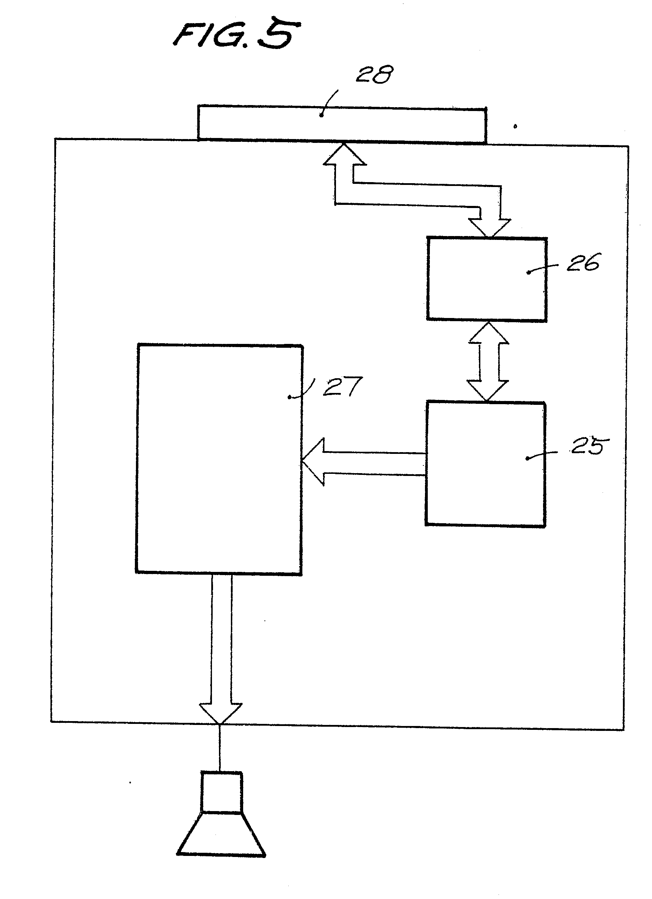

The AUDIO board 5 comprises (Fig. 5) a MICROPROCESSOR section 25, a DMA section 26, and an AUDIO section 27. This board has as well an inter-board connection 28.

The MICROPROCESSOR section 25 is analogous to the MICROPROCESSOR section of MASTER board 1.

The DMA section 26 is analogous to the same section of the SPRITES board 2.

The AUDIO section 27 comprises a fixed frequency generator, a plurality of programmable frequency generators, access circuits to the sound synthesizer, a sound synthesizer, a synthesizer filter, tone generators, generator filters, volume controls, a mixer, power amplifiers and a command receiver circuit.

The operation of the graphics and sound generating electronic system, is as follows:

As indicated above, the MASTER microprocessor 11 of the MASTER board 1 works as an intelligent control for the other microprocessors and performs managing of the floppy disk 6 and the outer inputs 7, 8 and 9.

The two PLANE microprocessors (MICROPROCESSOR section 21 of boards 3 and 4) manage each the video information of a respective image plane of unlimited dimensions, of which a 256 per 192 point rectangle becomes visible with 256 colours for each point from a palette of 4096 colours. The section comprises as well a nine-step general lighting control.

The SPRITES microprocessor (MICROPROCESSOR section 21 of Figure 3, corresponding to board 2) manages up to 128 image planes having dimensions from 8 × 8 up to 64 × 64 points and variable positions with the same colour palette. It is provided with a fast updating system for the video information memory (DMA), which is capable of loading more that four million pixels per second.

The AUDIO microprocessor has six available generators which permits -with the aid of a highly sophisticated software- playing of musical scores of up to three voices for whatever instrument. It is provided as well with a synthesizer which is capable of reproducing whatever type of sound, also the human voice.

The advantages of the system according to the invention as regards the previous art essentially consist on the fact that the data support memory is a magnetic memory (floppy disk), and that it is provided with a microprocessor for managing every image plane (three 256 × 192 pixel image planes).

The floppy disk information storage gives to the system according to the invention a great versatility and unlimited retraining possibilities.

The disk is complemented with read/write memories the contents of which can be altered by the system itself, with no outer control, on the basis of informations contained in the magnetic disk.

It is important to enhance the fact that in view of the described arrangement with a floppy disk, the system according to the invention has an outstanding easiness of updating and retraining by unqualified personnel.

Further to the described advantages, the following features are to be emphasized:

128 image planes (SPRITES) with dimensions that can be selected from between 8 × 8, 8 × 16, 16 × 8, 16 × 16, 32 × 16, 16 × 32, 32 × 32, 64 × 32, 32 × 64 and 64 × 64 points, and variable position within the screen.

All of the planes have independent, unlimited pixel by pixel scroll in two directions.

Either pixel of either image plane may have one of 256 colours within a palette of 4096 colours.

Independent lighting control for every one of the three image planes.

Sound amplifier with 25 Watt of power output and mixed input of 7 channels, six of these channels issuing from programmable amplitude, amplitude enveloping line, frequency and frequency enveloping line generators, the remaining channel issuing from an ADPCM synthesizer with variable working frequency.

The above exposition corresponds to an specific embodiment of the invention, though it will be understood that this latter can also be performed in many different ways, provided that these fall within the features of the invention.

Thus, it will be independent from the scope of the invention whatever non-essential features used in the practice thereof and accessible to an expert of the art, whenever they fall within the scope of the following claims.

**Claims**

1. Graphics and sound electronic generating systems, of the kind comprising a plurality of inter-connected microprocessors, one said microprocessors playing the function of central or master microprocessor as regards the remainder said microprocessors, at least one of the remainder microprocessors managing the video information of an image plane, and at least another remaining microprocessor managing the audio information, the master microprocessor being connected to a data supporting memory unit and to control means, **characterized** in that the system comprises a plurality of microprocessors, everyone of these microprocessors independently manages a single image plane, and the data supporting memory unit is a magnetic memory unit capable of reading and writing.

2. Graphics and sound electronic generating systems, according to claim 1, characterized in that the magnetic memory unit is a floppy disk unit.

3. Graphics and sound electronic generating systems, according to claim 1, characterized in that the system comprises an image control circuit including an independent microprocessor, a video unit and a random access dynamic memory unit connected to the microprocessor, and an unit for transferring information from the microprocessor to the video unit, the image control circuit managing a plurality of selectable dimension imageplanes.

4. Graphics and sound electronic generating systems, according to claim 1, characterized in that the control means comprise an unlimited, pixel by pixel independent scroll system in two directions.

5. Graphics and sound electronic generating systems, according to claim 1, characterized in that the control means comprise an independent lighting control device for every one of the said image planes.

6. Graphics and sound electronic generating systems, according to claim 1, characterized in that the audio unit essentially comprises a fixed frequency generator, a plurality of programmable frequency generators, a sound synthesizer, a mixer, and at least one power amplifier, the programmable generator amplitude, amplitude envelope line, frequency and frequency envelope line being programmable, and the synthetizer working frequency being variable.

0253751

FIG.1

FIG.2

0253751

## FIG. 3

# FIG.4

FIG.5